Europäisches Patentamt

European Patent Office

Office européen des brevets

(19)

(11) Veröffentlichungsnummer: **0 292 734 B1**

# (12) EUROPÄISCHE PATENTSCHRIFT

(45) Veröffentlichungstag der Patentschrift:
31.07.91 Patentblatt 91/31

(51) Int. Cl.⁵: **F16B 25/00**

(21) Anmeldenummer: **88106960.3**

(22) Anmeldetag: **30.04.88**

(54) **Gewindeformende Schraube.**

(30) Priorität: 27.05.87 DE 3717949

(43) Veröffentlichungstag der Anmeldung:
30.11.88 Patentblatt 88/48

(45) Bekanntmachung des Hinweises auf die
Patenterteilung:
31.07.91 Patentblatt 91/31

(84) Benannte Vertragsstaaten:
**AT DE ES FR GB NL SE**

(56) Entgegenhaltungen:
**DE-A- 2 706 246
DE-C-22 437 07
FR-A- 2 241 716
US-A- 4 069 730
US-A- 4 235 149**

(73) Patentinhaber: **ITW-ATECO GmbH
Stormarnstrasse 43-49
W-2000 Norderstedt 1 (DE)**

(72) Erfinder: **Isenberg, Rainer
Schattweg 16
W-5860 Iserlohn 7 (DE)**
Erfinder: **Hufnagel, Wolfgang
Lerchenstrasse 20
W-2807 Achim (DE)**

(74) Vertreter: **Dipl.-Ing. H. Hauck, Dipl.-Ing. E.
Graalfs, Dipl.-Ing. W. Wehnert, Dr.-Ing. W.
Döring
Neuer Wall 41
W-2000 Hamburg 36 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 292 734 B1

**Beschreibung**

Die Erfindung bezieht sich auf eine gewindeformende Schraube nach dem Oberbegriff des Patentanspruchs 1.

Aus der DE-PS2243707 ist eine gewindeformende Schraube bekannt geworden, die zwischen einem zylindrischen Gewindeschaft und einem zum Gewindeschaft koaxialen Führungszapfen einen sich zum Schraubenende hin verjüngenden Aufdornabschnitt mit unrunder Querschnittsfläche aufweist. Die Achse des Aufdornabschnitts ist gegenüber der Achse des Gewindeschaftes versetzt. Dadurch bildet sich ein erstes und ein zweites Segment im Aufdornabschnitt, wobei das erste Segment an allen Stellen einen größeren radialen Abstand von der Schraubenachse hat als das andere Segment. Im ersten Segment sind Teilgewindegänge geformt, während das andere Segment im wesentlichen glatt bleibt. Mit der bekannten Schraube wird erreicht, daß das erforderliche Drehmoment zur Anbringung der Schraube verringert wird und ein gerades Einführen der Schraube in das Material unterstützt wird. Die Leichtigkeit, mit der die Schraube in das Werkstück eingeschraubt werden kann, hängt nicht zuletzt von dem spezifisch ausgeformten Aufdornabschnitt ab.

Bei verhältnismäßig dünnen Blechen ist wichtig, daß das Verhältnis zwischen Antriebsdrehmoment und Durchziehdrehmoment klein ist. Für einen gegebenen Anwendungsfall soll im Idealfall das Antriebsdrehmoment sehr niedrig und das zum Durchziehen (Überdrehen) erforderliche Drehmoment relativ hoch sein. Um dies erreichen zu können, muß die Schraube beim Eindrehen möglichst viel Werkstoff zusammenhängend zu einem Gewindeansatz auspressen. Aus der DE-PS 2907360 ist bekannt geworden, anstelle des Führungszapfens oder dergleichen eine konische Bohrspitze vorzusehen und im Aufdornabschnitt mehrere über den ganzen Umfang der Schraube verlaufende, jedoch der Tiefe nach nur zum Teil ausgebildete Teilgewindegänge vorzusehen. Das erste Segment des Aufdornabschnitts soll in seinem radial äußersten Teil in Richtung zu dem zweiten Bereich hin und einem Winkel von höchstens etwa 6° zur Schraubenachse verlaufen.

Eine derartige Schraube ist sehr wirksam. Es hat sich jedoch herausgestellt, daß bei äußerst dünnen Blechen das Verhältnis von Antriebs- zu Durchziehdrehmoment noch verbesserbar ist. Die Gefahr, daß eine Schraube im sehr feinen Blech überdreht wird, ist besonders hoch, insbesondere wenn die Schrauben mit automatisch arbeitenden Schraubendrehern verarbeitet werden.

Der Erfindung liegt daher die Aufgabe zugrunde, eine Blechschraube zu schaffen, die besonders für sehr feine Bleche geeignet ist und gleichwohl ein hohes Überdrehmoment ermöglicht.

Diese Aufgabe wird durch die Merkmale des Kennzeichnungsteils des Anspruches 1 gelöst.

Die erfindungsgemäße Schraube sieht einen Führungszapfen vor wie bei der eingangs genannten Blechschraube, weist hingegen im Aufdornabschnitt zum ersten Bereich hin mehrere über den ganzen Umfang der Schraube verlaufende, jedoch der Tiefe nach nur zum Teil ausgebildete Teilgewindegänge auf. Es hat sich gezeigt, daß dadurch die axialen Kräfte, welche über das Drehmoment im geformten Gewinde wirken, verringert werden. Gleichzeitig erhöht sich die Anzahl der im Eingriff befindlichen Flanken und somit die Kraftaufnahmefähigkeit des geformten Gewindes.

Nach einer Ausgestaltung der Erfindung ist vorgesehen, daß die Steigerung des Gewindes P kleiner oder gleich $0,25 \cdot D \cdot n$ ist, wobei n 2 bis 4 ist. Dadurch wird eine Erhöhung des Steigungswinkels bei geringem Flankenabstand erzielt.

In einer anderen Ausgestaltung der Erfindung ist vorgesehen, daß der Kerndurchmesser etwa dem eines metrischen Gewindes entspricht. Üblicherweise haben Blechschrauben einen Kerndurchmesser, der geringer ist als es dem metrischen Gewinde entspricht. Der verhältnismäßig große Kerndurchmesser bei der erfindungsgemäßen Schraube verbessert den Sitz der Schraube in sehr dünnem Blech.

Aus dem eingangs beschriebenen Stand der Technik ist bekannt, den Radius des ersten Segmentes kleiner zu wählen als der des zweiten Segmentes. Während des Eindrehvorgangs der Schraube stützt sich das zweite Segment mit dem größeren Radius an der Lochwandung ab, während das erste Segment mit dem kleineren Radius das Aufdornen oder Aufbördeln bewirkt. In diesem Zusammenhang sieht eine Ausgestaltung der Erfindung vor, daß der Radius des ersten Segments annähernd zwischen 75 und 85%, vorzugsweise etwa 80% des Radius des zweiten Segments ist. Bei der erfindungsgemäßen Schraube ist mithin für das erste Segment des Aufdornabschnitts ein relativ kleiner Durchmesser vorgesehen, der ein wirksames Aufbördeln zur Folge hat. Es stellt sich daher ein verhältnismäßig großer axialer mit dem Gewinde des ersten Bereichs in Eingriff tretender Flanschbereich ein.

Eine besonders einfache Fertigung eines Rohlings für die erfindungsgemäße Schraube wird dadurch erhalten, daß erstes und zweites Segment des Aufdornabschnitts im Querschnitt durch annähernd gerade Linien ineinander übergehen. Es ist zwar denkbar, erstes und zweites Segment im Querschnitt so auszuformen, daß sich ein eiförmiges Gebilde ergibt. Hierfür ist jedoch eine relativ aufwendige Bearbeitung der Matrize zum Formen des Rohlings erforderlich. Die Matrize zum Herstellen eines Rohlings gemäß dem erfindungsgemäßen Merkmal ist demgegenüber weitaus unaufwendiger zu fertigen.

Das Einbördeln des Flansches wird durch eine Vortriebsbewegung der Schraube gleich zu Beginn des Drehens unterstützt, wenn sich gemäß einer Ausgestaltung das Teilgewinde vollständig über die Länge des ersten Segmentes erstreckt.

Bei einer praktischen Fortbildung ist der Führungszapfen zylindrisch ausgebildet, so daß die Schraube in eine vorgefertigte Bohrung eingesetzt werden kann. Schließlich sieht eine Ausgestaltung vor, daß der Führungszapfen von einer Bohrspitze gebildet ist, so daß sich ein Vorbohren erübrigt.

Einige Vorteile der erfindungsgemäßen Schraube sind bereits angeführt worden. Ein weiterer Vorteil besteht darin, daß eine symmetrische Lastverteilung im geformten Gegengewinde (Muttergewinde) erhalten wird. Ferner wird das Überdrehmoment erhöht und damit die Verbesserung der Montagesicherheit. Bei herkömmlichen Schrauben besteht die Gefahr, daß der automatische Schrauber mit Drehmomentbegrenzung frühzeitig abschaltet, weil das Erreichen des Überdrehmoments mit Sicherheit vermieden werden muß. Diese Gefahr wird bei der erfindungsgemäßen Schraube vermieden, da ein sehr großer Abstand zwischen Antriebsmoment bzw. Nennmoment und Überdrehmoment besteht. Bei der erfindungsgemäßen Schraube wird infolge der relativ großen Steigung eine Verkürzung der Schraubzeiten erzielt.

Die Erfindung wird nachfolgend anhand von Zeichnungen dargestellten Beispielen näher erläutert.

| | |
|---|---|
| Fig. 1 | zeigt perspektivisch eine Schraube nach der Erfindung (wobei die Gewindegänge nicht bezeichnet sind). |
| Fig. 2 | zeigt eine Seitenansicht einer Schraube nach Fig. 1 vor dem Einsetzen in zwei Werkstoffplatten. |
| Fig. 3 | zeigt eine ähnliche Darstellung wie Fig. 2, jedoch beim teilweisen Eindrehen der Schraube. |
| Fig. 4 | zeigt eine ähnliche Darstellung wie Fig. 3, jedoch nach dem Einschraubvorgang. |
| Fig. 5 | zeigt eine Einzelheit eines Schraubenrohlings in Seitenansicht. |
| Fig. 6 | zeigt einzelne Querschnitte durch den Rohling nach Fig. 5 entlang den Linien S1 bis S5. |
| Fign. 7 bis 9 | zeigen schematisch eine Schnittdarstellung der erfindungsgemäßen Schraube während des Eindrehvorgangs. |
| Fig. 10 | zeigt eine Seitenansicht des unteren Teils einer anderen Ausführungsform der erfindungsgemäßen Schraube. |
| Fig. 11 | zeigt die Schraube nach Fig. 10 um 90° gedreht. |
| Fig. 12 | zeigt die Schraube nach Fig. 10 oder 11 von unten gesehen. |

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

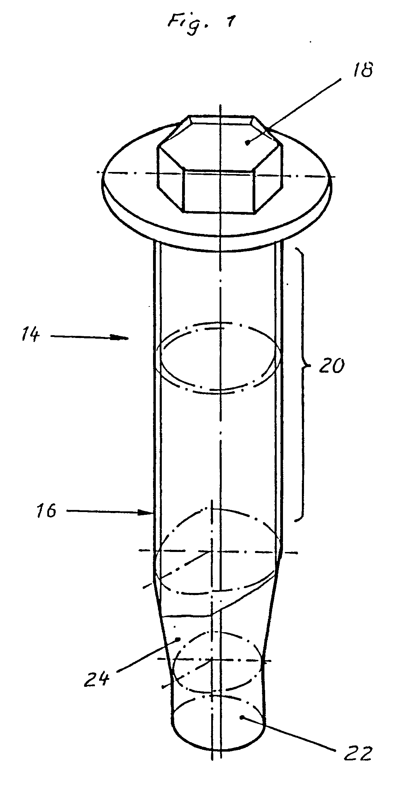

Die in den Figuren 1 bis 4 dargestellte Schraube 14 weist einen Schaft 16 mit einem Gewindeabschnitt 20 auf, einen Kopf 18 sowie einen zylindrischen Führungszapfen 22 geringeren Durchmessers, der koaxial zum Gewindeschaft 16 ausgerichtet ist. Das Gewinde des Gewindeabschnitts 20 ist ein Mehrganggewinde.

Zwischen dem Führungszapfen 22 und dem Gewindeschaft 16 ist ein konischer Aufbördelungs- oder Aufdornabschnitt 24 angeordnet. Dieser geht näher aus den Figuren 5 und 6 hervor. Man erkennt, daß ein erstes und zweites Segment a bzw. b vorgesehen ist, wobei das Segment a exzentrisch zur Achse 28 der Schraube 14 angeordnet ist. Die konzentrische Achse ist mit 26 bezeichnet. In Fig. 6 sind die unterschiedlichen Schnitte dargestellt, die entlang der Linien S1 bis S5 gelegt sind. Wie aus diesen Figuren, jedoch auch aus den Figuren 7 und 8 hervorgeht, ist der Radius der Krümmungen im Segment a in den einzelnen Querschnitten S1 bis S5 nicht nur kleiner als der Radius im Segment b, und zwar etwa 75 bis 85%, vorzugsweise etwa 80% kleiner, sondern es ergibt sich auch eine Unrundung entsprechend dem Übergang der beiden unterschiedlichen Radien.

Ferner ist der Aufdornabschnitt 24 ebenfalls mit einem mehrgängigen Gewinde versehen, das in das Gewinde des Gewindeschafts 16 übergeht. Das Gewinde des Aufdornabschnitts 24 besteht aus im wesentlichen nur im ersten Segment umlaufenden Gewindegängen, die der Tiefe nach jedoch nur teilweise ausgeführt sind. In Richtung Gewindeschaft erstrecken sich mindestens 1 bis 2 vollständig herumlaufende Gewindegänge. Das Gewinde im Aufdornabschnitt 24 ist mit 44 bezeichnet.

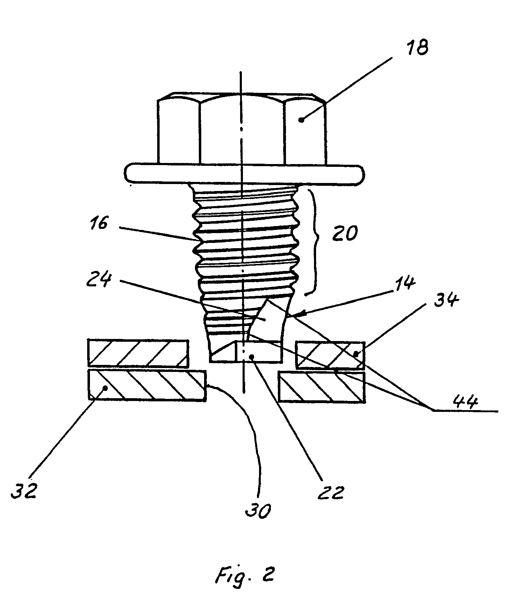

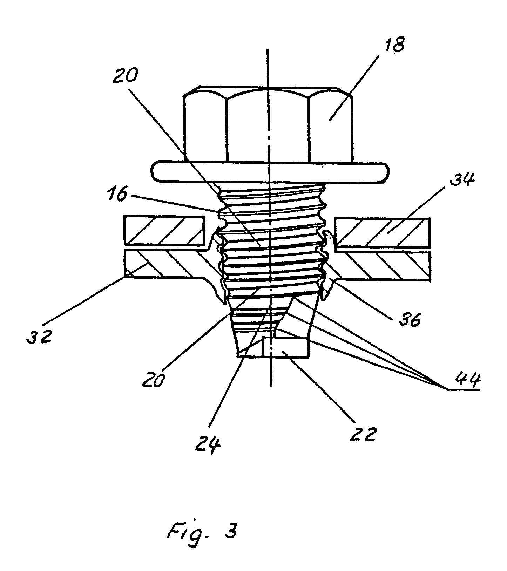

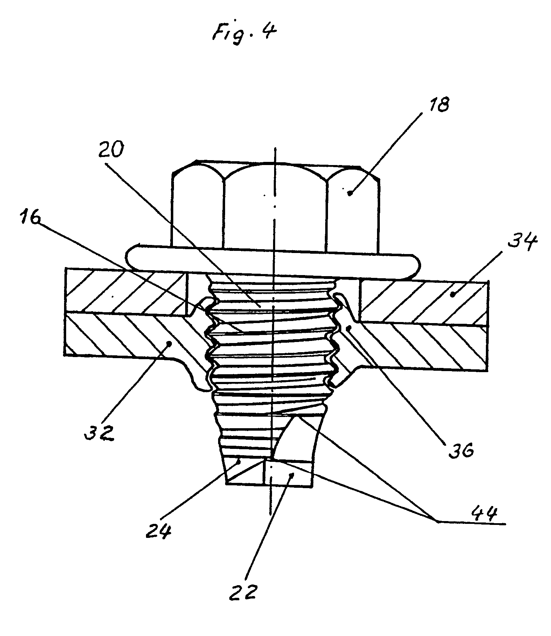

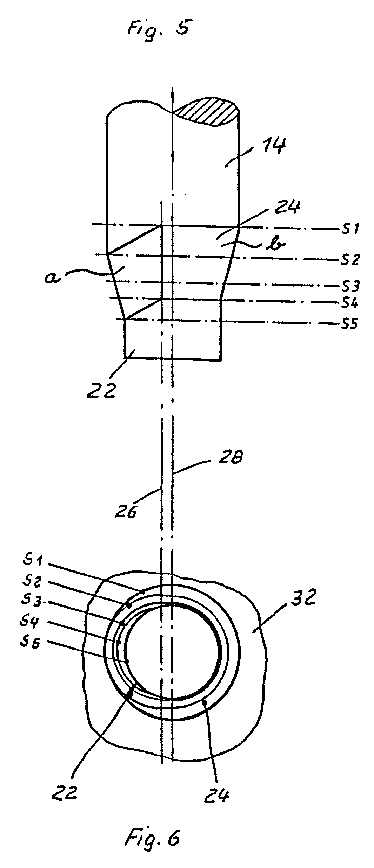

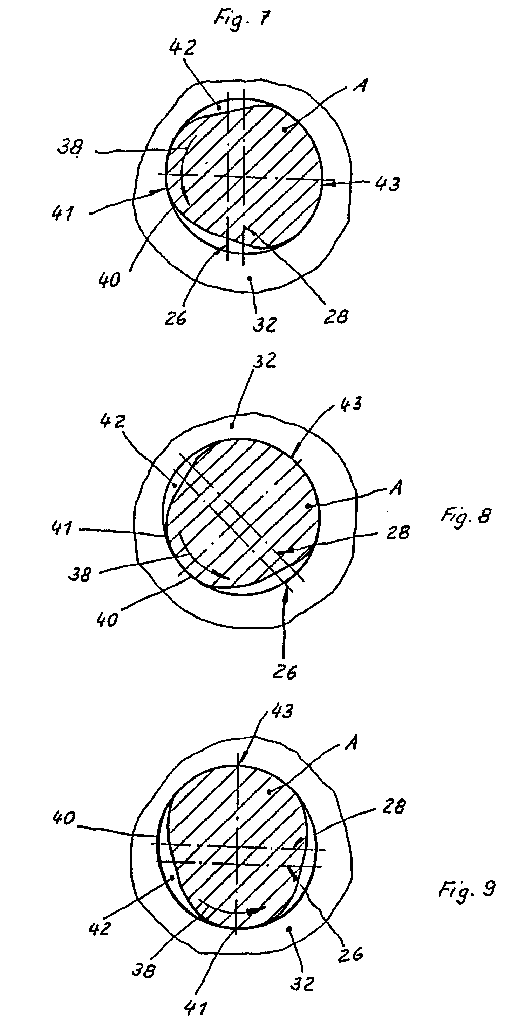

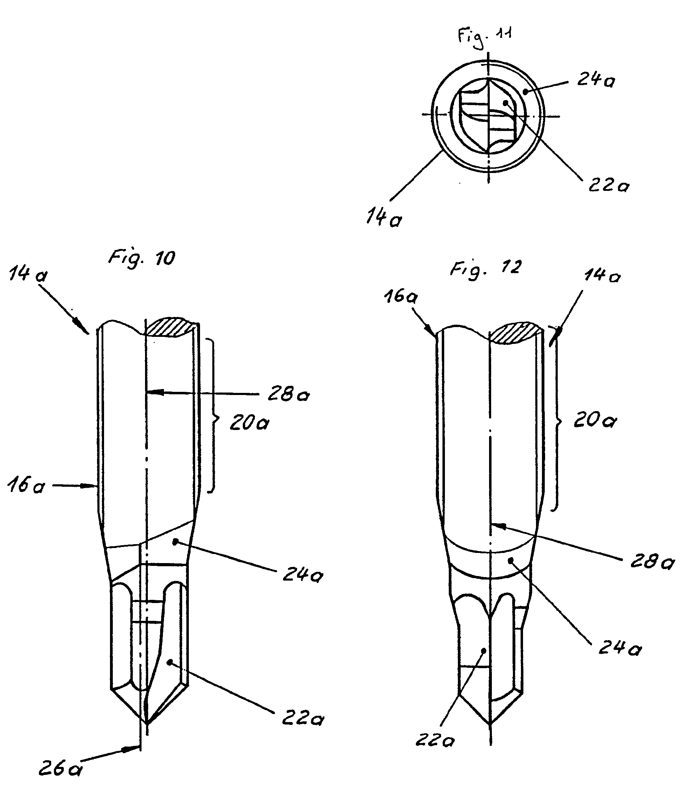

In Fig. 2 ist die Schraube 14 zu Beginn des Eintritts in eine in einem Blech 32 vorgesehene Bohrung gezeigt. In Fig. 2 ist ferner ein Blech 34 gezeigt, daß mit Hilfe des Schraubenkopfes 18 gegen das Blech 32 geklemmt werden soll. Die Bohrung 30 im Blech 32 kann durch Stanzen oder auf andere Weise gebildet sein. Wird eine Drehung und ein axialer Druck auf die Schraube 14 ausgeübt, wird anfangs Material des Bleches 32 in axialer Richtung flanschförmig verdrängt (Fig. 3). In Fig. 4 ist der durchgezogene axiale Flansch 36 fertiggestellt, wobei sich die Gewindegänge des Gewindeabschnitts 20 des Schafts 16 eingedrückt und komplementäre Gewindegänge entlang der Innenwand des durchgezogenen Flansches 36 gebildet haben. Durch weitere Drehung der

3

EP 0 292 734 B1

Schraube 14 kann die Klemmfläche des Kopfes 18 in Anlage auf das Blech 34 gebracht werden.

Aus den Figuren 7 bis 9 geht die Wirkungsweise des Aufdornabschnitts 24 deutlicher hervor. Die Ansichten gemäß Figuren 7 bis 9 sind vom Eintrittsende der Schraube her gesehen, wenn sie im Werkstück in die durch den Richtungspfeil 38 angezeigte Richtung gedreht wird.

Es sei angenommen, daß der in den Figuren 7 bis 8 gezeigte Querschnitt A einem der Querschnitte S1 bis S5 nach den Figuren 5 und 6 entspricht. Die Verdrängungskräfte wirken in gegenüberliegenden Zonen kleinerer und größerer Radien. Der kleinere ist mit 41 und der größere mit 43 bezeichnet. Auf das Verhältnis der beiden Radien wurde weiter oben bereits hingewiesen. Während der Drehung der Schraube in der durch den Richtungspfeil 38 angegebenen Richtung werden Verdrängungskräfte durch die begrenzte Zone des kleineren Radius auf das Werkstück ausgeübt, wobei die Zonen 40, 42 mit dem Werkstück außer Eingriff sind. Sie werden gebildet durch annähernd gerade Übergänge zwischen den Radien. Eine derartige Ausformung läßt sich besonders einfach herstellen.

Der gezeigte progressive begrenzte Eingriff der Fläche 41 mit dem Werkstück wird im wesentlichen durch die unrunden und im wesentlichen exzentrischen Flächen erzielt, wie sie durch die Querschnitte S1 bis S4 bestimmt sind. Das bereits erwähnte mehrgängige Gewinde 44 unterstützt die Verdrängungswirkung der Schraube. Hierzu wird zusätzlich angemerkt, daß eine relativ große Gewindesteigung vorgesehen ist mit der Formel $P \leq 0{,}25 \cdot D \cdot n$, wobei D der Gewindedurchmesser und n 2 bis maximal 4 ist.

Der Sitz der Schraube im aufgebördelten Abschnitt wird noch dadurch verbessert, daß der Kerndurchmesser des Gewindeabschnitts 16 verhältnismäßig groß ist. Er entspricht annähernd dem eines metrischen Gewindes.

In den Figuren 10 bis 12 ist eine abgewandelte Ausführungsform dargestellt. Eine Schraube 14a weist einen Schaft 16a mit einem Gewindeabschnitt 20a auf, der ebenfalls ein Mehrganggewinde ist entsprechend der vorstehend beschriebenen Ausführungsform. Der Unterschied der Schraube 14a zur Schraube 14 nach der vorstehend beschriebenen Ausführungsform liegt im Führungszapfen 22a, der als Bohrungsspitze ausgebildet ist. Zwischen dem als Bohrer ausgebildeten Führungszapfen 22a und dem Gewindeabschnitt 20a ist ein konischer exzentrischer Aufdornabschnitt 24a angeordnet. Seine Wirkungsweise wurde bereits weiter oben beschrieben.

## Patentansprüche

1. Gewindeformende Schraube mit einem an seinem Ende einen Kopf aufweisenden Schaft, der drei Axialbereiche aufweist, nämlich einen den Kopf einschließenden ersten Bereich, der einen mit einem Gewinde versehenen Haltebereich bildet, einem von dem anderen Ende des Schafts ausgehenden zweiten Bereich, der einen zu dem ersten Bereich koaxialen Führungszapfen bildet und einen maximalen Durchmesser hat, der kleiner ist als der Durchmesser des ersten Bereichs, und einen zwischen dem ersten und dem zweiten Bereich liegenden dritten Bereich, der einen sich zu dem zweiten Bereich hin im wesentlichen konisch verjüngenden Aufdornabschnitt bildet und ein an das Gewinde des ersten Bereichs anschließendes und die gleiche Steigung wie dieses habendes Teilgewinde aus mehreren der Tiefe nach nur zum Teil ausgebildeten Teilgewindegängen aufweist, wobei der Aufdornabschnitt zwei einander gegenüberliegende Umfangssegmente aufweist, von denen das eine Segment an allen Stellen einen größeren radialen Abstand von der Schraubenachse hat als das andere Segment und das Teilgewinde im wesentlichen nur im ersten Segment ausgebildet ist, dadurch gekennzeichnet, daß das Gewinde im Aufdornabschnitt (24) und im ersten Bereich zwei- oder mehrgängig geformt ist.

2. Schraube nach Anspruch 1, dadurch gekennzeichnet, daß die Steigung des Gewindes $P \leq 0{,}25 \cdot D \cdot n$ ist, wobei D der Durchmesser des Gewindes im ersten Bereich und n 2 bis 4 ist.

3. Schraube nach Anspruch 1 oder 2, dadurch gekennzeichnet, daß der Kerndurchmesser etwa dem eines metrischen Gewindes entspricht.

4. Schraube nach einem der Ansprüche 1 bis 3, dadurch gekennzeichnet, daß erstes und zweites Segment (a, b) des Aufdornabschnitts (24) im Querschnitt durch annähernd gerade Linien (40, 41) ineinander übergehen.

5. Schraube nach einem der Ansprüche 1 bis 4, dadurch gekennzeichnet, daß der Radius des ersten Segments (a) annähernd zwischen 75 und 85%, vorzugsweise etwa 80%, des Radius des zweiten Segments (b) ist.

6. Schraube nach einem der Ansprüche 1 bis 5, dadurch gekennzeichnet, daß der Flankenwinkel 40 bis 60° beträgt.

7. Schraube nach einem der Ansprüche 1 bis 6, dadurch gekennzeichnet, daß sich das Teilgewinde vollständig über die Länge des ersten Segments (a) erstreckt.

8. Schraube nach einem der Ansprüche 1 bis 7, dadurch gekennzeichnet, daß der Führungszapfen (22)

4

EP 0 292 734 B1

zylindrisch ist.

9. Schraube nach einem der Ansprüche 1 bis 8, dadurch gekennzeichnet, daß der Führungszapfen von einer Bohrspitze (22a) gebildet ist.

## Claims

1. Thread-forming screw comprising a stem including a head at one end thereof, with the stem having three axial portions, e.g. a first portion including the head which defines a threaded holding portion, a second portion extending from the other end of the stem which forms a guide portion coaxial to the first portion and which has a maximum diameter smaller than the diameter of the first portion, and a third portion located between the first and the second portions which defines a punching portion tapering substantially conically towards the second portion and including a partial thread adjacent to the thread of the first portion having the same lead as the latter and consisting of partial threadings only partly formed in depth, the punching portion including two opposite peripheral segments, one of the segments having a greater radial distance from the screw axis than the other segment all over its circumference, with the partial thread formed substantially only in the first segment, characterized in that the thread in the punching portion (24) and in the first portion is double-threaded or multiple threaded.

2. The screw of claim 1, wherein the thread P is < 0,25 Dn, wherein D is the diameter of the thread in the first portion and n is 2 to 4.

3. The screw of claim 1 or 2, wherein the core diameter corresponds approximately to that of a metric thread.

4. The screw of any of the claims 1 to 3, wherein the first and second segments (a, b) of the punching portion (24) in cross section merge into each other by approximately straight lines (40, 41).

5. The screw of any of the claims 1 to 4, wherein the radius of the first segment (a) is approximately 75 and 85%, preferably about 80%, of the radius of the second segment (b).

6. The screw of any of claims 1 to 5, wherein the flange angle is 40 to 60°.

7. The screw of any of the claims 1 to 6, wherein the partial thread extends completely about the length of the first segment (a).

8. The screw of any of the claims 1 to 7, wherein the guide pin (22) is cylindrical.

9. The screw of any of the claims 1 to 8, wherein the guide pin is defined by a drill tip (22a).

## Revendications

1. Vis auto-taraudeuse avec une tige comportant une tête, à son extrémité et présentant trois zones axiales à savoir
— une première zone adjacente à la tête, et qui forme une zone de fixation pourvue d'un filetage
— une deuxième zone partant de l'autre extrémité de la tige, et qui forme un tenon de guidage co-axial à la première zone et qui a un diamètre inférieur 8 celui de cette première zone
— et une troisième zone, située entre les premières et deuxième zones, qui forme une section de mandrin essentiellement conique se rétrécissant en direction de la deuxième zone, et qui présente un filetage partiel qui se raccorde à celui de la première zone et présente le même pas, formé de plusieurs filets partiels formés seulement en partie en ce qui concerne la profondeur,
la section de mandrin présentant deux segments circonférentiels disposés à l'opposé l'un de l'autre, dont l'un est, en tous points, à une distance radiale de l'axe plus grande que l'autre,
et le filetage partiel n'étant formé essentiellement que sur le premier segment
caractéristisée en ce que, dans la section de mandrin (24) et la première zone, le filetage est formé comme un filetage double ou multiple.

2. Vis selon la revendication 1, caractérisée en ce que le pas (P) du filetage est supérieur ou égal à 0,25 D · n, où D est le diamètre du filetage dans la première zone, et n est 2 à 4.

3. Vis selon les revendications 1 ou 2, caractérisée en ce que le diamètre de l'âme correspond à peu près à un filetage métrique.

4. Vis selon l'une des revendications 1 à 3, caractérisée en ce que le premier et le second segment (a, b) de le section de mandrin sont raccordés en section transversale, par des lignes (40, 41) à peu près droites.

5. Vis selon l'une des revendications 1 à 4, caractérisée en ce que la rayon du premier segment (a) est environ entre 75 et 85%, de préférence énviron 80% du rayon du second segment (b).

6. Vis selon l'une des revendications 1 à 5, caractérisée en ce que l'angle des flancs est de 40° à 60°.

7. Vis selon l'une des revendications 1 à 6, caractérisée en ce que le filetage partiel s'étend complètement

5

sur la longueur du premier segment (a).

8. Vis selon l'une des revendications 1 à 7, caractérisée en ce que le tenon de guidage (22) est cylindrique.

9. Vis selon l'une des revendications 1 à 8, caractérisée en ce que le tenon de guidage est constitué d'une pointe de perçage (22a).

Fig. 1

Fig. 2

Fig. 3

Fig. 4

Fig. 5

Fig. 6

Fig. 7

Fig. 8

Fig. 9

Fig. 11

24a

22a

14a

Fig. 10

14 a

28a

20a

16a

24a

22a

26a

Fig. 12

16a

14a

20a

28a

24a

22a